# EUROPÄISCHE PATENTSCHRIFT

(11) **EP 3 450 878 B1**
(45) Veröffentlichungstag und Bekanntmachung des Hinweises auf die Patenterteilung: **04.10.2023**
(21) Anmeldenummer: 18190972.2
(22) Anmeldetag: 27.08.2018
(51) Int. Cl.: F24T 10/15

(54) **ERDWÄRMESONDE**
GEOTHERMAL PROBE
SONDE GÉOTHERMIQUE

(30) Priorität: 28.08.2017 CH 10602017
(43) Veröffentlichungstag der Anmeldung: 06.03.2019
(73) Patentinhaber: HakaGerodur AG, 8717 Benken (CH)
(72) Erfinder: VOLLENWEIDER, Bruno, 8864 Reichenburg (CH); EBNOETHER, Alfons, 8637 Laupen (CH); MAYER, Peter, 8717 Benken (CH)
(74) Vertreter: Schaad, Balass, Menzl & Partner AG

(56) Entgegenhaltungen:
- EP-A1- 2 735 818
- EP-A1- 2 840 333
- DE-A1-102012 111 140
- DE-U1- 20 202 578
- DE-U1-202007 008 880
- DE-U1-202008 012 453

## Beschreibung

Die Erfindung betrifft eine Erdwärmesonde zum Austausch von Wärme zwischen einem fluiden Wärmeträger und dem Erdreich. Die Erdwärmesonde weist wenigstens ein Zulaufrohr und wenigstens ein Rücklaufrohr auf, die an einem Ende durch einen Erdwärmesondenfuss fluidleitend verbunden sind.

Erdwärmesondenanlagen sind dem Fachmann bekannt und werden zur Nutzung der Erdwärme eingesetzt. Dazu werden wenigstens ein Zulaufrohr und wenigstens ein Rücklaufrohr, die über ein als Erdwärmesondenfuss bezeichnetes Verbindungsstück paarweise miteinander verbunden sind, in ein Bohrloch im Erdreich abgesenkt.

Im Betrieb wird ein fluider Wärmeträger durch ein erstes Zulaufrohr von einem in Erdbodennähe angeordneten ersten Ende zu dessen entgegengesetzt angeordnetem zweiten Ende bzw. zum Erdwärmesondenfuss geführt. Über den Erdwärmesondenfuss wird der Wärmeträger umgelenkt und über ein zweites Rücklaufrohr von dessen zweitem Ende zu dessen erstem Ende geführt. Auf seinem Weg wird der Wärmeträger durch die über die Rohrwandung geleitete Erdwärme erwärmt. In der Regel wird mittels einer an die Erdwärmesondenrohre angeschlossenen Wärmepumpe die Erdwärme in ein Heizsystem geführt. Üblicherweise wird als fluider Wärmeträger ein Wasser-Glykol-Gemisch verwendet.

Üblicherweise weisen Zulauf- und Rücklaufrohr eine hohlzylindrische Form auf. Als Beispiel für eine konkrete Ausführung von Zulauf- und Rücklaufrohr bzw. deren Herstellung sei etwa auf die EP-A-2 395 301 oder die EP-A-2 365 027 verwiesen.

Bei einer U-förmigen Erdwärmesonde weisen die Einströmvorrichtung und die Ausströmvorrichtung jeweils ein Zulaufrohr und ein Rücklaufrohr auf.

Zudem sind doppel-U-förmige Erdwärmesonden bekannt, bei denen die Einströmvorrichtung zwei Zulaufrohre und die Ausströmvorrichtung ebenfalls zwei Rücklaufrohre umfassen. Der den Verbindungsabschnitt bildende Erdwärmesondenfuss verbindet dabei jeweils ein Zulaufrohr mit einem Rücklaufrohr, so dass zwei voneinander unabhängige Schleifen gegeben sind.

EP 2 810 769 offenbart ein Schutzmantelrohr mit einer Diffusionssperre und einem Kernrohr aus einem Kunststoff, sowie mit einem aufextrudierten Schutzmantel. Solche Rohre werden für Trinkwasserleitungen verwendet, die im mit Schadstoffen kontaminierten Untergrund verlegt werden. Für einen Einsatz im Erdwärmebereich wurden solche Rohre jedoch nicht in Betracht gezogen, da ein Schutzmantel eine zusätzliche Isolation des Rohres darstellt, die den Wärmeaustausch mit dem Erdreich stark behindert.

DE 20202578U offenbart eine Erdwärmesonde gemäss dem Oberbegriff des Anspruchs 1.

Zulaufrohre und Rücklaufrohre von Erdwärmesonden und Erdwärmesondenfüsse sind typischerweise Kunststoffrohre aus Polyethylen oder Polypropylen. Diese haben jedoch den Nachteil, dass im Erdreich vorkommende Gase wie beispielsweise CO₂ oder Methangas durch die Rohrwand hindurchdiffundieren können. Solche in den fluiden Wärmeträger eintretende Gase können den Kreislauf des fluiden Wärmeträgers beeinflussen und zu einer Betriebsstörung führen.

Aufgabe der vorliegenden Erfindung ist es daher, einen Erdwärmesondenfuss und eine Erdwärmesonde bereitzustellen, die im Wesentlichen diffusionsdicht sind.

Die Aufgabe wird durch die Erdwärmesonde gemäss Anspruch 1 gelöst. Weitere bevorzugte Ausführungsformen sind Gegenstand der abhängigen Ansprüche.

Es hat sich herausgestellt, dass der Erdwärmesondenfuss ausgesprochen diffusionsdicht ist. Der Erdwärmesondenfuss für eine Erdwärmesonde zur Verbindung von mindestens einem Zulaufrohr mit mindestens einem Rücklaufrohr weist wenigstens einen im Wesentlichen um 180 Grad umgelenkten Rohrbogen auf und ist dadurch gekennzeichnet, dass die Mantelfläche des Erdwärmesondenfusses wenigstens teilweise mit einer metallischen Schicht beschichtet ist oder dass der Erdwärmesondenfuss im Wesentlichen aus einem metallischen Werkstoff besteht.

Die U-Form erschwert eine konventionelle Beschichtung des Erdwärmesondenfusses. Ein lückenloses Bedecken der Oberfläche ohne Falten ist fertigungstechnisch in wirtschaftlicher Weise nicht möglich. Die erfindungsgemässe metallische Schicht wird jedoch vorzugsweise mittels PVD-Verfahren (physikalische Gasphasenabscheidung) auf dem U-förmigen Erdwärmesondenfuss aufgetragen, sodass eine dünne, aber diffusionsdichte metallische Schicht entsteht. Gerade der radial innenliegende Teil der Mantelfläche des Erdwärmesondenfusses stellt bei einer vollflächigen Beschichtung eine grosse Herausforderung dar, die mittels PVD-Verfahren gelöst werden kann. Beim PVD-Verfahren erfolgt das Metallisieren mittels einer physikalischen Abscheidung aus der Gasphase, zum Beispiel mittels Aufdampfens. Vorzugsweise wird die gesamte Mantelfläche des Erdwärmesondenfusses vollflächig mit der metallischen Schicht beschichtet. Alternativ können die Randbereiche, die dazu bestimmt sind, mit dem wenigstens einen Zulaufrohr und dem wenigstens einen Rücklaufrohr verschweisst zu werden, von der ansonsten vollflächigen metallischen Beschichtung ausgenommen werden. Vorzugsweise wird die metallische Schicht in einer Dicke von ca. 0.1 µm bis 100 µm aufgetragen. Bevorzugt wird aber eine Dicke von ca. 10 µm auf dem Erdwärmesondenfuss aufgebracht.

Alternativ kann der Erdwärmesondenfuss im Wesentlichen aus einem metallischen Werkstoff bestehen. Dadurch kann der Erdwärmesondenfuss diffusionsdicht hergestellt werden und einen optimalen Wärmetransport ermöglichen. Vorzugsweise ist der metallische Werkstoff des Erdwärmesondenfusses ausgewählt aus der Gruppe bestehend aus Aluminium, Stahl, Gusseisen, Bronze, Zink, Kupfer und Messing oder Legierungen davon.

In der Regel haben Erdwärmesondenfüsse wenigstens einen im Wesentlichen um 180 Grad umgelenkten Rohrbogen, aber ansonsten können sie von der Form deutlich voneinander abweichen. Sie können einstückig oder mehrstückig sein. Die vorliegende Erfindung umfasst sämtliche möglichen Geometrien und Formen von Erdwärmesondenfüssen. So weisen beispielsweise einige Erdwärmesondenfüsse an ihren unteren Enden Bohrungen auf, durch die an den Erdwärmesondenfüssen Gewichte durch eine entsprechende Verschraubung befestigt werden können. Die Gewichte sollen das Einführen der Erdwärmesonden in das Bohrloch erleichtern und dem durch das Grundwasser im Bohrloch bewirkten Auftrieb entgegenwirken. Neben dem Verschrauben besteht die Möglichkeit, dass das entsprechende Gewicht mit dem Erdwärmesondenfuss verschweisst ist. Andere Erdwärmesondenfüsse weisen eine Y-artige Form auf, die drei parallel verlaufende Rohrabschnitte aufweisen, von denen der eine Rohrabschnitt den Y-Stammteil bildet, mit dem die beiden anderen, die Y-Schenkel bildenden Rohrabschnitte, über je einen bogenförmigen Rohrteil verbunden sind und damit die Umlenkung um 180 Grad bilden. Der den Y-Stammteil bildende Rohrabschnitt wird dabei mittels eines Stopfens verschlossen, der das Einbringen der Erdwärmesonde erleichtert. Auch solche Geometrien werden wenigstens teilweise, vorzugsweise vollflächig mit einer metallischen Beschichtung beschichtet, um sicherzustellen, dass keine Gase aus dem Erdreich in Berührung mit dem fluiden Wärmeträger kommen können. Auch hier ist es möglich, dass zum Verschweissen bestimmte Bereiche von der ansonsten vollflächigen metallischen Beschichtung ausgenommen werden.

Die metallische Schicht enthält oder besteht vorzugsweise aus einem Metall ausgewählt aus der Gruppe von Aluminium, Kupfer und Stahl, bevorzugt Edelstahl, oder aus Legierungen dieser Materialien. Besonders bevorzugt ist dabei Aluminium aufgrund seiner Beständigkeit und geringen Toxizität.

Vorzugsweise ist die metallische Schicht des Erdwärmesondenfusses oder der im Wesentlichen aus einem metallischen Werkstoff gefertigten Erdwärmesondenfuss zumindest teilweise, vorzugsweise vollflächig mit einer Lackschicht oder einer Kunststoffschicht überzogen, um die metallische Schicht oder den metallischen Erdwärmesondenfuss vor Beschädigung und vor Korrosion weitgehend zu schützen.

Als mögliche Lacke eignen sich hierfür insbesondere Polyurethanlacke, Acrylate, Polyvinylchloride bzw. Polyvinylchlorid-Copolymere, Polyvinylidenchloride sowie UVvernetzbare Dispersionen, wie Acryl-Polyurethan-Dispersionen, insbesondere aliphatische Polyurethan-Dispersionen. Diese Lackschicht kann auch mehrfach aufgebracht werden.

Mögliche Kunststoffe für die Kunststoffschicht sind Polyethylen (PE), Polypropylen (PP), Polyamid (PA), Acrylnitril-Butadien-Styrol-Copolymere (ABS), Polyethylenterephthalat (PET), Polyoxymethylen (POM), Polyurethan (PUR) oder andere thermoplastische Kunststoffe. Der Kunststoff kann aber auch ein Polyesterharz sein. Die Kunststoffschicht kann ausserdem verstärkt sein, indem sie zusätzlich Glasfasern, Mineralstoffen, Kohle- oder Textilfasern enthält. Insbesondere verstärkte Polyesterharze eignen sich gut als Schutzschicht.

Die vorliegende Erfindung betrifft eine Erdwärmesonde zum Austausch von Wärme zwischen einem fluiden Wärmeträger und dem Erdreich mit mindestens einem Zulaufrohr und mit mindestens einem Rücklaufrohr und einem erfindungsgemässen Erdwärmesondenfuss, der mit dem mindestens einen Zulaufrohr und dem mindestens einen Rücklaufrohr fluidleitend verbunden ist. Die Verbindung wird vorzugsweise mittels Schweissen erstellt. Bevorzugte Verfahren sind das Heizelement-Stumpf-Schweissverfahren, das Heizelement-Muffen-Schweissverfahren oder das Elektro-Schweissmuffenverfahren. Wenn der Erdwärmesondenfuss im Wesentlichen aus einem metallischen Werkstoff hergestellt ist, kann die Verbindung auch als Pressverbindung ausgeführt sein. Solche Verfahren sind dem Fachmann bekannt.

In der Erfindung ist auf der Mantelfläche des mindestens einen Zulaufrohrs und des mindestens einen Rücklaufrohrs wenigstens teilweise, vorzugsweise vollflächig, eine Beschichtung angeordnet. Die Beschichtung ist eine Mehrschichtverbundfolie mit mehreren einzelnen Schichten. Alternativ wird eine metallische Beschichtung offenbart, vorzugsweise eine Metallfolie oder eine mittels PVD Verfahren aufgetragene metallische Schicht. Durch diese Beschichtung sind neben dem Erdwärmesondenfuss auch das mindestens eine Zulaufrohr und das mindestens eine Rücklaufrohr im Wesentlichen diffusionsdicht. Um die Haftung der Metallfolie oder der Mehrschichtverbundfolie zu verbessern, kann die Oberfläche des mindestens einen Zulaufrohrs und/oder des mindestens einen Rücklaufrohrs beschichtet sein. Wenigstens eine Schicht der Mehrschichtverbundfolie ist dabei als Metallfolienlage und/oder als Kunststoffschicht mit diffusionshemmenden Eigenschaften ausgebildet. Die Metallfolienlage hat nicht nur diffusionshemmende Eigenschaften, sie dient auch als mechanische Verstärkung des Rohres, so dass die Innendruckfestigkeit gegenüber einem Rohr ohne Metallfolieneinlage erhöht ist. Die Metallfolie oder die Mehrschichtverbundfolie kann mit dem Erdwärmesondenrohr wenigstens teilweise verschweisst oder verklebt sein.

Eine Metallfolienlage kann dabei beispielsweise eine Aluminiumfolienlage, eine Kupferfolienlage oder eine Stahlfolienlage sein.

Eine Kunststoffschicht mit diffusionshemmenden Eigenschaften kann beispielsweise ein PVDF (Polyvinylidenfluorid), EVOH (Ethylen-Vinylalkohol-Copolymer), ein Polyamid oder ein LCP-Polymer (liquid crystal polymer) enthalten.

Die Metallfolie ist vorzugsweise eine Folie aus Aluminium, Kupfer oder Stahl, wobei Aluminium bevorzugt ist. Die Beschichtung der Rohre kann beispielsweise eine unbeschichtete Metallfolie oder eine einseitig selbstklebende Metallfolie sein, vorzugsweise handelt es sich dabei um eine Aluminiumfolie. Die Metallfolie kann zusätzlich ein- oder beidseitig mit einem Kunststoff beschichtet sein, um die Haftungseigenschaften zu verbessern. Mögliche Kunststoffe sind Polyethylen (PE), Polypropylen (PP), Polyamid (PA), Polyethylenterephthalat (PET), Polyurethan (PUR) oder andere thermoplastische Kunststoffe.

Die Metallfolie oder die Mehrschichtverbundfolie hat vorzugsweise eine Dicke von 10 um bis 500 um. Das hat den Vorteil, dass der Aussendurchmesser der erfindungsgemässen Erdwärmesonde nicht wesentlich beeinflusst wird. Durch die Metallfolienlage in der Mehrschichtverbundfolie wird der Wärmetransport nur marginal verschlechtert, sodass dieser Nachteil durch die guten Diffusionseigenschaften in Kauf genommen werden kann.

Die Mehrschichtverbundfolie weist vorzugsweise ausserdem wenigstens eine, besonders bevorzugt mehrere Kunststoffschichten auf, welche die Reissfestigkeit und Langzeitstabilität der Mehrschichtverbundfolie positiv beeinflussen. Ausserdem hat die wenigstens eine Kunststoffschicht einen erheblichen Einfluss auf die Haftungseigenschaften der Mehrschichtverbundfolie, da sie ein Rutschen der Mehrschichtverbundfolie auf dem Zulauf- und/oder Rücklaufrohr verhindert. Dadurch wird auch die Korrosionsbeständigkeit der Metallfolienlage erhöht, da stirnseitig kein Wasser eintreten kann. Besonders bevorzugt sind dabei die Kunststoffschichten aus Polyethylen, Polypropylen, Polyethylenterephthalat, Polypropylen-Copolymer, Polyamid oder andere geeignete thermoplastische Kunststoffe.

Besonders bevorzugt hat die Mehrschichtverbundfolie folgenden Aufbau:
1. Kunststoffschicht aus Polyethylen
2. Metallfolienlage aus Aluminium
3. Kunststoffschicht aus Polyethylenterephthalat
4. Metallfolienlage aus Aluminium
5. Kunststoffschicht aus Polyethylen.

Die Metallfolienlage hat dabei vorzugsweise eine Dicke von 7 bis 10 um, besonders bevorzugt von 9 um und die Mehrschichtverbundfolie hat vorzugsweise eine Dicke von 90 bis 100 um, vorzugsweise von 98 um.

Die einzelnen Schichten sind vorzugsweise durch einen Haftvermittler miteinander verbunden. Beispiele für Haftvermittler sind Silane, Hydroxyester, Aminoester, Urethane, Isocyanate und/oder mit (Meth)acrylaten copolymerisierbare Säuren.

Vorzugsweise ist auf der Mehrschichtverbundfolie oder auf der Metallfolie eine ein- oder mehrschichtige aufextrudierte Schutzschicht aus Kunststoff angeordnet, welche die Mehrschichtverbundfolie oder die Metallfolie vor Beschädigungen und vor Korrosion schützt, die insbesondere beim Einbringen der Erdwärmesonde auftreten können. Besonders bevorzugt handelt es sich dabei um einen Kunststoff ausgewählt aus der Gruppe bestehend aus Polyethylen, Polypropylen und Polyethylenterephthalat oder Mischungen davon. Diese Kunststoffe können einen mehrschichtigen Aufbau aufweisen und mittels Coextrusion hergestellt werden. Durch den mehrschichtigen Aufbau der aufextrudierten Schutzschicht wird die Haftung zu der Mehrschichtverbundfolie oder der Metallfolie verbessert.

Die Metallfolie oder die Mehrschichtverbundfolie kann mit der Schutzschicht wenigstens teilweise verschweisst oder verklebt sein. Im Falle einer Verklebung kann der Kleber entweder auf die Mehrschichtverbundfolie oder die Metallfolie aufgebracht werden oder beispielsweise mittels Coextrusions-Verfahren auf die Schutzschicht aufgebracht werden.

Die Mehrschichtverbundfolie oder die Metallfolie kann schraubenlinienförmig oder längs und sich an den Stosskanten überlappend um das Zulauf- und/oder Rücklaufrohr gewickelt werden, wobei die sich überlappenden und spiralig längs verlaufenden Stosskanten entweder nur aufeinander gelegt sind, oder miteinander verschweisst oder verklebt werden, um eine gute Dichtigkeit zu erreichen. Alternativ kann die Mehrschichtverbundfolie oder die Metallfolie auch schraubenlinienförmig oder längs um das Zulauf- und/oder Rücklaufrohr gewickelt werden, wobei die spiralig oder längs verlaufenden Stosskanten auf Stoss liegen und miteinander verschweisst oder verklebt werden.

Jede beschriebene Art der Umwicklung mit Verklebung oder Verschweissung kann nicht nur einlagig, sondern auch mehrlagig und insbesondere zweilagig ausgeführt werden. Die Stosskante der zweiten Lage kommt dabei vorzugsweise nicht unmittelbar über der Stosskante der ersten Lage zu liegen, sondern wird so angeordnet, dass die zweite oder weitere Lage den Stossbereich der früheren Lage abdeckt.

Diese Foliennaht kann an die Aussenseite der Mehrschichtverbundfolie angelegt werden, oder, um eine besonders gute Abdichtung zu erreichen, zu einer Art Labyrinthdichtung ein- oder mehrfach gefalzt bzw. umgeschlagen werden.

Die Schweissstelle zwischen Erdwärmesondenfuss und Zulauf- und Rücklaufrohren wird vorzugsweise mit einem Metallband, besonders bevorzugt mit einem selbstklebenden Aluminiumband, von Hand abgedeckt, um die Erdwärmesonde gesamthaft diffusionsdicht auszugestalten.

Offenbart wird auch die Verwendung einer Metallfolie mit einer Schutzschicht aus Kunststoff oder eines Schutzmantelrohrs mit einer Mehrschichtverbundfolie einer aufextrudierten Schutzschicht aus Kunststoff, wie in EP 2 810 769 beschrieben, als Diffusionsdichtung für Zulauf- und/oder Rücklaufrohre von Erdwärmesonden. Die Schutzschicht kann beispielsweise aufextrudiert sein. Erstaunlicherweise wurde festgestellt, dass die in der EP 2 810 769 erwähnten Schutzmantelrohre für Zulauf- und/oder Rücklaufrohre von Erdwärmesonden verwendet werden können, ohne dass der Wärmeaustausch zwischen dem Erdreich und dem fluiden Wärmeträger wesentlich negativ beeinträchtigt wird.

Vorzugsweise ist die Metallfolie oder die Mehrschichtverbundfolie unmittelbar auf der Mantelfläche des Zulauf- und/oder Rücklaufrohrs angebracht. Mögliche beispielhafte Materialien für das Zulauf- und/oder Rücklaufrohr wurden oben bereits erwähnt. Zum Schutz der Metallfolie oder der Mehrschichtverbundfolie wird diese mit einem Kunststoff vorzugsweise vollflächig überzogen, um die Metallfolie oder die Mehrschichtverbundfolie vor Verletzungen zu schützen. Ein Überziehen mittels Extrusion ist dem Fachmann bekannt.

Die Metallfolienlage oder die Mehrschichtverbundfolie hat nicht nur diffusionshemmende Eigenschaften, sie dient auch als mechanische Verstärkung des Rohres, so dass die Innendruckfestigkeit gegenüber einem Rohr ohne entsprechende Beschichtung erhöht ist. Die Metallfolie oder die Mehrschichtverbundfolie kann mit dem Erdwärmesondenrohr wenigstens teilweise verschweisst oder verklebt sein.

Vorzugsweise ist zwischen der Metallfolie oder der Mehrschichtverbundfolie und der Schutzschicht ein flächiges Gewebe angeordnet. Das flächige Gewebe ist vorzugsweise aus einem Material ausgewählt aus der Gruppe bestehend aus einem Metall, einem Polymer, Glasfasern und Carbonfasern oder einer Mischung davon.

Mögliche Metalle für das flächige Gewebe sind dabei Aluminium, Stahl, Bronze, Zink, Kupfer und Messing oder Legierungen davon.

Mögliche Polymere sind beispielsweise Polyacrylnitril, Polyamid, Aramid, Polypropylen, Polyester oder Polyurethan. Bevorzugt sind hierbei polyesterhaltige Fasermaterialien. Als polyesterhaltige Fasermaterialien kommen solche Materialien in Betracht, die ganz oder teilweise aus Polyester bestehen. Besonders bevorzugt sind Aramid enthaltende flächige Gewebe.

Vorzugsweise ist dabei das flächige Gewebe ein Mischgewebe, das heisst, ein Gewebe, das aus mehreren Materialen besteht. Mögliche Mischgewebe sind beispielsweise Mischgewebe mit Carbonfasern und Aramidfasern oder Mischgewebe mit Carbonfasern und Glasfasern.

Das flächige Gewebe kann gewoben, gewirkt, geflochten oder gedreht sein. Das flächige Gewebe bewirkt eine Erhöhung der Innendruckfestigkeit des mindestens einen Zulaufrohrs und des mindestens einen Rücklaufrohrs, wobei die Innendruckfestigkeit bis zu 75% und mehr, vorzugsweise 100% und mehr erhöht werden kann. Alternativ oder zusätzlich dazu kann die Innendruckfestigkeit auch durch die Dicke der Metallfolie erreicht werden.

Vorzugsweise ist die Metallfolie oder Mehrschichtverbundfolie und/oder das flächige Gewebe überlappend aufgebracht. Durch die Überlappung kann zum einen eine vollflächige Bedeckung des mindestens einen Zulaufrohrs und des mindestens einen Rücklaufrohrs sichergestellt werden. Zum zweiten weisen Metallfolien in der Regel wenige Mikrolöcher (auch pinholes genannt) auf, die beim Walzprozess entstanden sind. Durch das überlappende und/oder mehrlagige Aufbringen der Mehrschichtverbundfolie oder der Metallfolie kann sichergestellt werden, dass diese Mikrolöcher durch die darüberliegende Schicht überdeckt werden kann.

Es zeigt:
- Fig. 1: eine erste Ausführungsform eines Erdwärmesondenfusses.
- Fig. 2: eine Erdwärmesonde mit dem Erdwärmesondenfuss gemäss Figur 1.
- Fig. 3: ein Verbindungsstück eines in Figur 4 gezeigten mehrteiligen Erdwärmesondenfusses
- Fig. 4: eine zweite Ausführungsform eines Erdwärmesondenfusses
- Fig. 5: die Verwendung einer Beschichtung als Diffusionsdichtung für Zulauf- und/oder Rücklaufrohre von Erdwärmesonden.

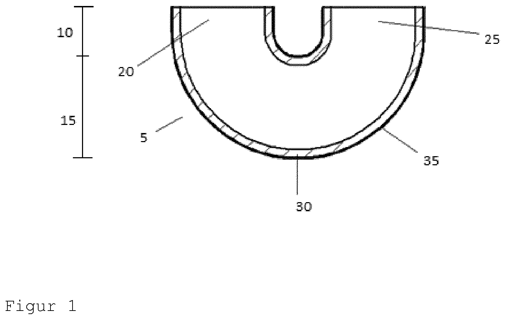

Figur 1 zeigt eine schematische Darstellung eines Erdwärmesondenfusses 5. Der Erdwärmesondenfuss ist aus einem thermoplastischen Kunststoff gefertigt, beispielsweise aus Polyolefin, vorzugsweise aus Polyethylen. Der Erdwärmesondenfuss 5 weist einen Rohraufnahmeabschnitt 10 und einen Fussabschnitt 15 auf. Im Rohraufnahmeabschnitt 10 sind Rohrbogenenden 20, 25 ausgebildet, die zur Verbindung des Erdwärmesondenfusses 5 mit den hier nicht gezeigten Zufuhr- und Rücklaufrohren dienen. Bestandteil des Fussabschnitts 15 ist ein im Wesentlichen um 180 Grad umgelenkter Rohrbogen 30, in dem der fluide Wärmeträger vom Zulaufrohr zum Rücklaufrohr umgelenkt wird. Die Mantelfläche des Erdwärmesondenfusses, das heisst sowohl die Mantelflächen des Rohraufnahmeabschnitts 10 als auch des Fussabschnitts 15, sind mit der metallischen Schicht 35 zumindest teilweise, vorzugsweise jedoch vollflächig beschichtet. Es ist jedoch auch möglich, dass die zum Verschweissen vorgesehenen Rohrbogenenden 20, 25 des Rohraufnahmeabschnitts 10 frei von der metallischen Schicht 35 sind. Abhängig vom gewählten Schweissverfahren können dies die Stirnflächen oder die Mantelflächen der Rohrbogenenden 20, 25 sein. Auf der metallischen Schicht 35 kann zusätzlich eine Richtung Erdreich gerichtete Lackschicht angebracht sein, um die metallische Schicht vor Beschädigungen und vor Korrosion zu schützen.

Der in Figur 1 gezeigte Erdwärmesondenfuss kann auch aus Metall gefertigt sein. In diesem Fall wird vorzugsweise keine metallische Schicht 35 auf der Mantelfläche des Erdwärmesondenfusses angeordnet. Es ist aber auch möglich, einen metallischen Erdwärmesondenfuss mit einer metallischen Schicht zu beschichten. Auf dem aus einem Metall gefertigten Erdwärmesondenfuss mit einer optionalen metallischen Schicht kann zusätzlich eine Richtung Erdreich gerichtete Lackschicht angebracht sein, um die Metalloberfläche vor Beschädigungen und vor Korrosion zu schützen.

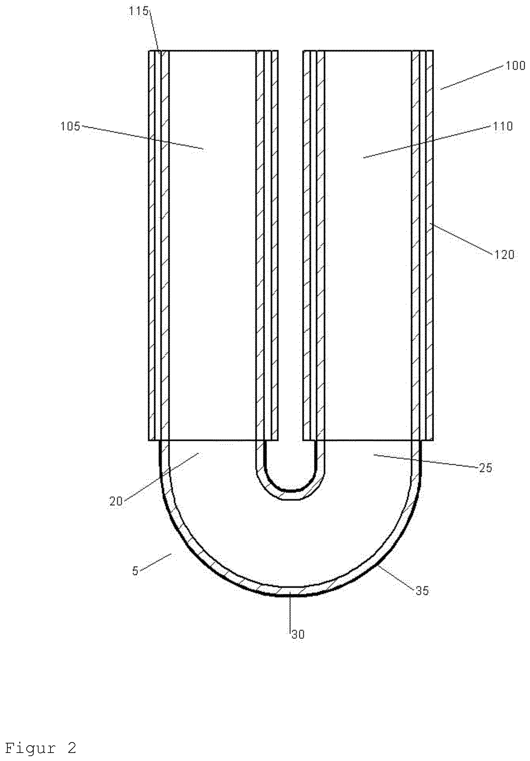

Figur 2 zeigt exemplarisch eine erfindungsgemässe Erdwärmesonde 100. Der Erdwärmesondenfuss 5, der in Figur 1 detailliert beschrieben ist, ist dabei mit einem Zulaufrohr 105 und einem Rücklaufrohr 110 fluidleitend verbunden. Die Verbindung kann beispielsweise mittels Schweissen erfolgen. Sowohl auf der Mantelfläche des Zulaufrohrs 105 als auf auch der Mantelfläche des Rücklaufrohrs 110 ist eine Beschichtung 115 in Form einer Mehrschichtverbundfolie angeordnet. Die Mehrschichtverbundfolie weist mehrere einzelne Schichten auf, wovon wenigstens eine Schicht als Metallfolienlage und/oder als Kunststoffschicht mit diffusionshemmenden Eigenschaften ausgebildet ist. Vorzugsweise weist die Mehrschichtverbundfolie ausserdem eine oder mehrere Kunststoffschichten auf, die die Mehrschichtverbundfolie rutschfest und reisssicher machen. Eine optionale zusätzlich auf die Mehrschichtverbundfolie Richtung Erdreich gerichtete, aufextrudierte Schutzschicht 120 aus Kunststoff schützt die Mehrschichtverbundfolie vor Beschädigungen und vor Korrosion. In einer anderen Ausführungsform ist die Beschichtung nicht als Mehrschichtverbundfolie, sondern als Metallfolie ausgeführt.

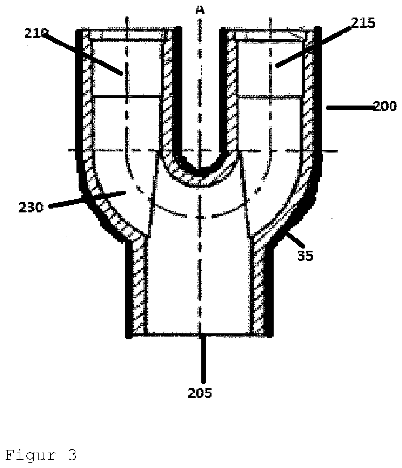

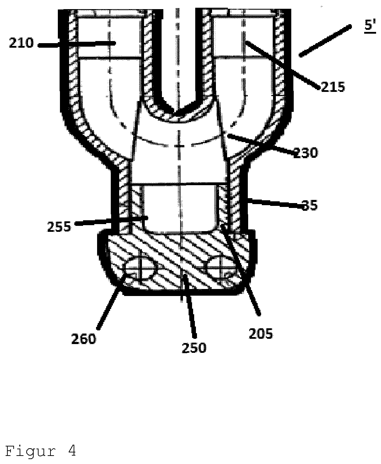

Figur 3 zeigt einen Teil eines mehrteiligen Erdwärmesondenfusses 5', der in Figur 4 gezeigt wird. Das in Figur 3 gezeigte Verbindungsstück 200 ist im wesentlichen Y-förmig ausgebildet und weist drei parallele Rohrabschnitte 205, 210, 215 auf, von denen der eine Rohrabschnitt 205 den Y-Stammteil bildet. Die beiden anderen Rohrabschnitte 210, 215 sind über je einen bogenförmigen Rohrteil 230 mit dem den Y-Stammteil bildenden Rohrabschnitt verbunden und bilden zusammen mit den Schenkeln das Y-förmige Verbindungsstück. Die beiden Rohrabschnitte 210, 215 sind symmetrisch zu einer in Figur 3 mit A bezeichneten Achse des Y-Stammteiles angeordnet. Die Mantelfläche des Verbindungsstücks 200 sind mit der metallischen Schicht 35 zumindest teilweise, vorzugsweise jedoch vollflächig beschichtet. Es ist jedoch auch möglich, dass die zum Verschweissen vorgesehenen Rohrbogenenden der Rohrabschnitte 210 und 215 des Verbindungsstücks 200 frei von der metallischen Schicht 35 sind. Auf der metallischen Schicht 35 kann zusätzlich eine Richtung Erdreich gerichtete Lackschicht angebracht sein, um die metallische Schicht vor Beschädigungen und vor Korrosion zu schützen.

Das Verbindungsstück 200 bildet zusammen mit einem Stopfen 250 den in Figur 4 gezeigten Erdwärmesondenfuss 5' aus, der ein Zulaufrohr mit einem Rücklaufrohr verbindet, und in welchem ein fluider Wärmeträger vom Zulaufrohr zum Rücklaufrohr umgelenkt wird. Der Stopfen 250 ist mit seinem zylindrischen Teil 255 in das Innere des den Y-Stammteil bildenden Rohrabschnittes eingesetzt. Der Bodenteil 260 überragt in seiner Ovallänge die Stirnfläche. Der Stopfen 250 und der den Y-Stammteil bildende Rohrabschnitt 205 werden miteinander verschweisst oder verklebt. In besonders bevorzugter Weise werden die beiden Teile im Heizelement-Muffenschweissverfahren miteinander verbunden.

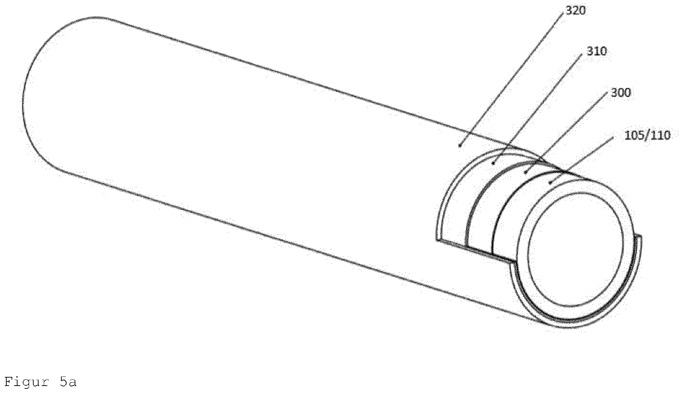

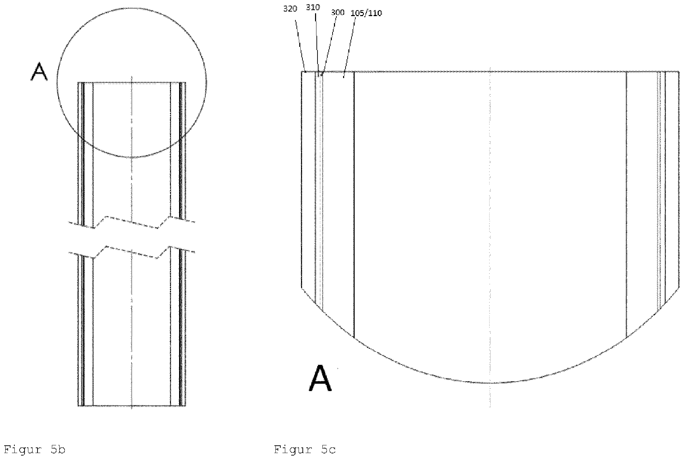

Figur 5a zeigt die Verwendung der Beschichtung als Diffusionsdichtung für Zulauf- und/oder Rücklaufrohre von Erdwärmesonden. Das gezeigte Zulaufrohr 105 oder Rücklaufrohr 110 dient dazu, fluidleitend mit einem Erdsondenfuss verbunden zu werden. Die Verbindung kann beispielsweise mittels Schweissen erfolgen. Sowohl auf der Mantelfläche des Zulaufrohrs 105 oder des Rücklaufrohrs 110 ist eine Beschichtung angeordnet. Die Beschichtung weist mehrere einzelne Schichten auf. Unmittelbar auf der Mantelfläche des Zulaufrohrs 105 oder des Rücklaufrohrs 110 ist eine Metallfolie 300 angeordnet. Die Metallfolie 300 kann einlagig oder vorzugsweise mehrlagig (vorzugsweise 2 bis 5 Lagen) sein. Auf der Metallfolie 300 kann ein flächiges Gewebe 310 angeordnet sein, das die Metallfolie 300 vor mechanischen Einwirkungen schützt und eine Erhöhung der Innendruckfestigkeit bewirkt. Auch das flächige Gewebe 310 kann einlagig oder vorzugsweise mehrlagig (vorzugsweise 2 bis 5 Lagen) angeordnet sein. Auf der Metallfolie 300 oder sofern vorhanden auf dem flächigen Gewebe 310 ist eine Kunststoffschicht 320 angeordnet, die als Schutzschicht dient. Ausserdem macht sie die ganze Beschichtung rutschfest und reisssicher. Anstelle der Metallfolie kann auch eine Mehrschichtverbundfolie verwendet werden, auf der optional ein flächiges Gewebe angeordnet ist, um die Innendruckfestigkeit zu erhöhen. Figur 5b zeigt einen Schnitt durch das in Figur 5a gezeigte Zulauf- oder Rücklaufrohr. Figur 5c zeigt einen Detailausschnitt aus Figur 5b, der die einzelnen Schichten, nämlich Kunststoffschicht 320, flächiges Gewebe 310, Metallfolie oder Mehrschichtverbundfolie 300 und Zulaufrohr 105 oder Rücklaufrohr 110 zeigt.

## Patentansprüche

1. Erdwärmesonde (100) zum Austausch von Wärme zwischen einem fluiden Wärmeträger und dem Erdreich mit mindestens einem Zulaufrohr (105) und mit mindestens einem Rücklaufrohr (110) und einem Erdwärmesondenfuss (5, 5') zur Verbindung des mindestens einen Zulaufrohrs (105) mit dem mindestens einem Rücklaufrohr (110),
wobei der Erdwärmesondenfuss (5, 5') wenigstens einen im Wesentlichen um 180 Grad umgelenkten Rohrbogen aufweist und die Mantelfläche des Erdwärmesondenfusses (5, 5') wenigstens teilweise mit einer metallischen Schicht (35) beschichtet ist oder der Erdwärmesondenfuss (5, 5') im Wesentlichen aus einem metallischen Werkstoff besteht,
wobei der Erdwärmesondenfuss (5, 5') mit dem mindestens einen Zulaufrohr (105) und dem mindestens einen Rücklaufrohr (110) fluidleitend verbunden ist,
**dadurch gekennzeichnet, dass** auf dem mindestens einen Zulaufrohr (105) und dem mindestens einen Rücklaufrohr (110) wenigstens teilweise eine Mehrschichtverbundfolie mit mehreren einzelnen Schichten angeordnet ist, und wenigstens eine Schicht der Mehrschichtverbundfolie als Metallfolienlage und/oder Kunststoffschicht mit diffusionshemmenden Eigenschaften ausgebildet ist,
wobei die Mehrschichtverbundfolie schraubenlinienförmig oder längs und sich an Stosskanten überlappend um das Zulauf- und/oder Rücklaufrohr gewickelt ist, und die sich überlappenden und spiralig längs verlaufenden Stosskanten entweder nur aufeinander gelegt sind oder miteinander verschweisst oder verklebt sind,
oder wobei die Mehrschichtverbundfolie schraubenlinienförmig oder längs um das Zulauf- und/oder Rücklaufrohr gewickelt ist, und die spiralig oder längs verlaufenden Stosskanten auf Stoss liegen und miteinander verschweisst oder verklebt sind.

2. Erdwärmesonde (100) gemäss Anspruch 1, **dadurch gekennzeichnet, dass** die Mehrschichtverbundfolie vollflächig angeordnet ist.

3. Erdwärmesonde (100) gemäss Anspruch 1, **dadurch gekennzeichnet, dass** die Mehrschichtverbundfolie schraubenlinienförmig oder längs an den Stosskanten überlappend um das Zulaufrohr oder Rücklaufrohr gewickelt ist, wobei die sich überlappenden und spiralig längs verlaufenden Stosskanten entweder nur aufeinandergelegt sind oder miteinander verschweisst oder verklebt sind.

4. Erdwärmesonde (100) gemäss Anspruch 1, **dadurch gekennzeichnet, dass** die Mehrschichtverbundfolie ausserdem wenigstens eine, vorzugsweise mehrere Kunststoffschichten aufweist.

5. Erdwärmesonde (100) gemäss Anspruch 1, **dadurch gekennzeichnet, dass** die einzelnen Schichten der Mehrschichtverbundfolie mit einem Haftvermittler verbunden sind.

6. Erdwärmesonde (100) gemäss einem der Ansprüche 1 bis 5, **dadurch gekennzeichnet, dass** die Mantelfläche des Erdwärmesondenfusses (5, 5') wenigstens teilweise mit einer metallischen Schicht (35) beschichtet ist und die metallische Schicht (35) Aluminium enthält oder aus Aluminium besteht.

7. Erdwärmesonde (100) gemäss einem der Ansprüche 1 bis 5, **dadurch gekennzeichnet, dass** der Erdwärmesondenfuss (5, 5') im Wesentlichen aus einem metallischen Werkstoff besteht und der metallische Werkstoff ausgewählt ist aus der Gruppe bestehend aus Aluminium, Stahl, Gusseisen, Bronze, Zink, Kupfer und Messing oder Legierungen davon.

8. Erdwärmesonde (100) gemäss einem der Ansprüche 1 bis 7, **dadurch gekennzeichnet, dass** die metallische Schicht (35) oder der im Wesentlichen aus einem metallischen Werkstoff gefertigte Erdwärmesondenfuss zumindest teilweise, vorzugsweise vollflächig, mit einer Lackschicht oder mit einer Kunststoffbeschichtung überzogen ist.

9. Erdwärmesonde (100) gemäss Anspruch 1, **dadurch gekennzeichnet, dass** auf der Mehrschichtverbundfolie eine ein- oder mehrschichtige aufextrudierte Schutzschicht aus Kunststoff angeordnet ist.

## Claims

1. Geothermal probe (100) for exchanging heat between a fluid heat transfer medium and the ground, comprising at least one inflow pipe (105) and comprising at least one return pipe (110) and a geothermal probe foot (5, 5') for connection of the at least one inflow pipe (105) to the at least one return pipe (110),
wherein the geothermal probe foot (5, 5') has at least one pipe bend, which is deflected substantially by 180 degrees, and the lateral surface of the geothermal probe foot (5, 5') is at least partially coated with a metal layer (35) or the geothermal probe foot (5, 5') consists substantially of a metal material,
wherein the geothermal probe foot (5, 5') is fluidically connected to the at least one inflow pipe (105) and to the at least one return pipe (110), **characterized in that** a multilayer composite film having multiple individual layers is placed at least partially on the at least one inflow pipe (105) and the at least one return pipe (110), and at least one layer of the multilayer composite film is in the form of a metal foil ply and/or plastics layer with diffusion-inhibiting properties,
wherein the multilayer composite film is wound helically or lengthwise around the inflow pipe and/or return pipe with an overlap at abutting edges, and the overlapping abutting edges that run helically lengthwise either are only placed one on another or are welded or adhesively bonded to one another,
or wherein the multilayer composite film is wound helically or lengthwise around the inflow pipe and/or return pipe, and the abutting edges that run helically or lengthwise abut one another and are welded or adhesively bonded to one another.

2. Geothermal probe (100) according to Claim 1, **characterized in that** the multilayer composite film is placed over the entire surface area.

3. Geothermal probe (100) according to Claim 1, **characterized in that** the multilayer composite film is wound helically or lengthwise around the inflow pipe or return pipe with an overlap at the abutting edges, wherein the overlapping abutting edges that run helically lengthwise either are only placed one on another or are welded or adhesively bonded to one another.

4. Geothermal probe (100) according to Claim 1, **characterized in that** the multilayer composite film moreover has at least one plastics layer, preferably multiple plastics layers.

5. Geothermal probe (100) according to Claim 1, **characterized in that** the individual layers of the multilayer composite film are connected by means of an adhesion promoter.

6. Geothermal probe (100) according to one of Claims 1 to 5, **characterized in that** the lateral surface of the geothermal probe foot (5, 5') is at least partially coated with a metal layer (35) and the metal layer (35) contains aluminium or consists of aluminium.

7. Geothermal probe (100) according to one of Claims 1 to 5, **characterized in that** the geothermal probe foot (5, 5') consists substantially of a metal material and the metal material is selected from the group consisting of aluminium, steel, cast iron, bronze, zinc, copper and brass, or alloys thereof.

8. Geothermal probe (100) according to one of Claims 1 to 7, **characterized in that** the metal layer (35) or the geothermal probe foot manufactured substantially from a metal material is coated at least partially, preferably over the entire surface area, with a lacquer layer or with a plastics coating.

9. Geothermal probe (100) according to Claim 1, **characterized in that** a single-layer or multilayer protective plastics layer that is extruded on is placed on the multilayer composite film.

## Revendications

1. Sonde géothermique (100) destinée à l'échange de chaleur entre un caloporteur fluide et le sol, ladite sonde comprenant au moins un tube d'arrivée (105) et au moins un tube de retour (110) et un pied de sonde géothermique (5, 5') destiné à relier l'au moins une tube d'arrivée (105) à l'au moins un tube de retour (110),
le pied de sonde géothermique (5, 5') comportant au moins un coude de tube qui est dévié sensiblement de 180 degrés et la surface d'enveloppe du pied de sonde géothermique (5, 5') étant revêtue au moins partiellement d'une couche métallique (35) ou le pied de sonde géothermique (5, 5') étant sensiblement en une matière métallique,
le pied de sonde géothermique (5, 5') étant relié fluidiquement à l'au moins un tube d'entrée (105) et à l'au moins un tube de retour (110),
**caractérisé en ce qu'**un film composite multicouche comprenant plusieurs couches individuelles est disposé au moins partiellement sur l'au moins un tube d'entrée (105) et l'au moins un tube de retour (110), et au moins une couche du film composite multicouche est conçue comme une strate de film métallique et/ou une couche de matière synthétique ayant des propriétés d'inhibition de diffusion,
le film composite multicouche étant enroulé en hélice ou dans le sens de la longueur et à recouvrement au niveau des bords aboutés autour du tube d'arrivée et/ou du tube de retour,
et les bords aboutés s'étendant à recouvrement et en spirale dans le sens de la longueur étant soit simplement placés les uns sur les autres soit soudés ou collés les uns aux autres,
ou le film composite multicouche étant enroulé en hélice ou dans le sens de la longueur autour du tube d'arrivée et/ou du tube de retour, et les bords aboutés qui s'étendent en spirale ou dans le sens de la longueur étant placés bout à bout et soudés ou collés les uns aux autres.

2. Sonde géothermique (100) selon la revendication 1, **caractérisée en ce que** le film composite multicouche est disposé sur toute la surface.

3. Sonde géothermique (100) selon la revendication 1, **caractérisée en ce que** le film composite multicouche est enroulé e hélice ou dans le sens de la longueur à recouvrement au niveau des bords aboutés autour du tube d'arrivée ou du tube de retour, les bords aboutés qui s'étendent à recouvrement et en spirale dans le sens de la longueur étant soit posés uniquement les uns sur les autres soit soudés ou collés les uns aux autres.

4. Sonde géothermique (100) selon la revendication 1, **caractérisée en ce que** le film composite multicouche comporte également au moins une couche de matière synthétique, de préférence une pluralité de celles-ci.

5. Sonde géothermique (100) selon la revendication 1, **caractérisée en ce que** les couches individuelles du film composite multicouche sont liées à l'aide d'un promoteur d'adhérence.

6. Sonde géothermique (100) selon l'une des revendications 1 à 5, **caractérisée en ce que** la surface d'enveloppe du pied de sonde géothermique (5, 5') est au moins partiellement revêtue d'une couche métallique (35) et la couche métallique (35) contient de l'aluminium ou est en aluminium.

7. Sonde géothermique (100) selon l'une des revendications 1 à 5, **caractérisée en ce que** le pied de sonde géothermique (5, 5') est sensiblement en une matière métallique et la matière métallique est choisie dans le groupe comprenant l'aluminium, l'acier, la fonte, le bronze, le zinc, le cuivre et le laiton ou des alliages de ceux-ci.

8. Sonde géothermique (100) selon l'une des revendications 1 à 7, **caractérisée en ce que** la couche métallique (35) ou le pied de sonde géothermique réalisé sensiblement à partir d'une matière métallique est recouvert au moins partiellement, de préférence sur toute la surface, d'une couche de laque ou d'un revêtement de matière synthétique.

9. Sonde géothermique (100) selon la revendication 1, **caractérisée en ce qu'**une couche de protection extrudée en matière synthétique, monocouche ou multicouche, est disposée sur le film composite multicouche.
